# EUROPÄISCHE PATENTANMELDUNG

(11) **EP 1 898 330 A1**
(43) Veröffentlichungstag der Anmeldung: **12.03.2008**
(21) Anmeldenummer: 06120208.1
(22) Anmeldetag: 06.09.2006
(51) Int. Cl.: G06F 21/00, H04L 29/06, H04L 29/08

(54) **Verfahren für Single-Sign-On bei Peer-To-Peer-Anwendungen**

(71) Anmelder: Nokia Siemens Networks GmbH & Co. KG, 81541 München (DE)
(72) Erfinder: Guan, Qi, 1210 Wien (AT); Volkmann, Gerald, 15344 Strausberg (DE)
(74) Vertreter: Maier, Daniel Oliver

(57) **Zusammenfassung**

Die Erfindung betrifft ein Verfahren für Single-Sign-On bei Peer-to-Peer-Anwendungen (P1, P2), wobei von einem Nutzer (N) mehrere Peer-to-Peer-Anwendungen (P1, P2) genutzt werden, wobei von einem Anbieter ein Anmelde- und Authentifizierungsfunktion (AUT) zur Verfügung gestellt wird. Dabei ist zwischen dem Anbieter der Anmelde- und Authentifizierungsfunktion (AUT) und den zur Verfügung gestellten Peer-to-Peer-Anwendungen (P1, P2) ein Übereinkommen für eine Authentifizierung von Nutzern (N) getroffen worden. Von einem Nutzer (N) wird dann eine Anmeldung und Authentifizierung mit Hilfe der Anmelde- und Authentifizierungsfunktion (AUT) beim Anbieter durchgeführt (1) und bei einer erfolgreichen Authentifizierung des Nutzers (N) eine Authentifizierungsinformation (AI) generiert, welche an den Nutzer (N) übertragen wird (2). Bei einem Zugriffs-versuch auf eine Peer-to-Peer-Anwendung (P1, P2), für welche das Übereinkommen mit dem Anbieter für eine Authentifizierung von Nutzern (N) besteht, wird vom Nutzer (N) diese Authentifizierungsinformation (AI) mitgesendet (3, 6). Die Authentifizierungsinformation (AI) wird dann von der Peer-to-Peer-Anwendung (P1, P2) verifiziert (4, 7) und dadurch dem Nutzer (N) ein Zugang zu dieser Peer-to-Peer-Anmeldung (P1, P2) ermöglicht (4, 8).

Die mit dieser Erfindung erzielten Vorteile bestehen insbesondere darin, dass von einem Nutzer (N),um Zugang zu mehreren, verschiedenen Peer-to-Peer-Anwendungen (P1, P2) zu erhalten, nur einmal eine Authentifizierung bei einer ersten Anmeldung mittels der Anmelde- und Authentifizierungsfunktion (AUT) durchgeführt werden muss. Danach wird die Aufgabe der Identifizierung und Authentifizierung von einem Single-Sign-On-Mechanismus übernommen.

## Beschreibung

### Technisches Gebiet

Die Erfindung betrifft ein Verfahren für Single-Sign-On bei Peer-to-Peer-Anwendungen, wobei von einem Nutzer mehrere Peer-to-Peer-Anwendungen genutzt werden können.

### Stand der Technik

Heutzutage ist es häufig üblich, dass von einem Teilnehmer eines Kommunikationsnetzwerkes ein Anmelde- und Authentifizierungsfunktion, welcher auch als Login bezeichnet werden kann, durchlaufen werden muss, um beispielsweise auf eine Anwendung, einen Rechner, ein Kommunikationsnetzes oder ein System, etc. zugreifen zu können. Ein Login ist dabei ein Vorgang für eine Anmeldung eines Nutzers z.B. bei einer Anwendung, auf einem Rechner, eine System oder in einem Kommunikationsnetz, etc., bei welchem vom Nutzer üblicherweise eine Nutzerkennung zur Identifizierung und z.B. ein Passwort oder eine persönliche Identifikationsnummer, ein PIN, etc. eingegeben wird und durch die Anwendung, das Kommunikationsnetz, System, etc. eine Überprüfung von Zugriffsberechtigungen, ein so genannte Authentifizierung durchgeführt wird.

Die Identifizierung bezeichnet dabei einen Prozess, durch welchen eine eindeutige Zuordnung z.B. eines Nutzers, einer Anwendung oder eines Systems zu seiner in der Anwendung, im Kommunikationsnetz oder im System definierten Rolle erfolgt. Entsprechend dieser Rolle und meist nach erfolgter Authentifizierung werden dann beispielsweise so genannte Berechtigungen für die Nutzung der Anwendung, des Systems, des Kommunikationsnetzes, etc. erteilt. Der Begriff Authentifizierung fasst dabei alle Vorgänge zusammen, durch welchen die Authentizität und der Ursprung bei einer Übertragung von Informationen festgestellt und überprüft werden (z.B. durch Passwörter, PIN, etc.).

Für einen einfacheren Zugang zu mit Login versehenen Anwendungen, Systemen, etc. gibt es heute eine Möglichkeit einer Anmeldung und Authentifizierung durch so genanntes Single-Sign-On.

Der Begriff Single-Sign-On steht für Einmalanmeldung und bedeutet, dass von einem Nutzer nach nur einmaligem Durchlaufen des Login-Prozesses beispielsweise auf alle Anwendungen, Rechner, Systeme, etc., für welche dieser Nutzer berechtigt ist, zugegriffen werden kann. Für eine Nutzung z.B. einer weiteren Anwendung oder eines anderen Rechners bzw. Systems ist dann kein neuerliches Login (Anmeldung und Authentifizierung) des Nutzers mehr erforderlich.

Bei Single-Sign-On wird vom Nutzer nur einmal unter zu Hilfenahme des Login-Prozesses beispielsweise in einem Kommunikationsnetz, einem System oder einem so genannten Portal, von welchem üblicherweise im World Wide Web mehrere Anwendungen zur Verfügung gestellt werden, identifiziert und authentifiziert. Danach wird die Aufgabe der Identifizierung und Authentifizierung von einem Single-Sign-On-Mechanismus übernommen.

Übliche Lösungsansätze für Single-Sign-On-Mechanismen sind beispielsweise:
- so genannte Portallösungen, welche z.B. im World Wide Web zur Nutzung von mehreren Anwendungen angeboten werden. Dabei kann sich der Nutzer in einem so genannten Portal erstmals einloggen und wird dort authentifiziert sowie für die Nutzung von Anwendungen autorisiert.
- so genannte Ticketing-Systeme, bei diesen verfügen mehrere Anwendungen über eine gemeinsame Authentifizierungsinformation für einen Nutzer. Diese Information wird dann beispielsweise zwischen den Anwendungen ausgetauscht bzw. auf den eingeloggten Nutzer in Form eines virtuellen Tickets übertragen.
- oder lokale Lösungen, bei denen z.B. vom Benutzer lokal auf seinem Arbeitsplatz bzw. Rechner eine (Client-)-Software installiert wird, von welcher z.B. in einer erscheinenden Loginmaske automatisch nur die Nutzerkennung oder Nutzerkennung und Passwort eingetragen werden. Diese Daten können beispielsweise in einer verschlüsselten Datei lokal auf der Arbeitsstation, dem Rechner bzw. dem Endgerät des Nutzers, auf einer so genannten Chipkarte oder auf einem so genannten Single-Sign-On-Server abgespeichert sein.

Zahlreiche Anwendungen, aber auch Kommunikationsnetze oder - systeme können heute beispielsweise nach dem so genannten Peer-to-Peer-Prinzip gestaltet sein.

Unter dem Begriff Peer-to-Peer, abgekürzt P2P oder P-to-P, wird üblicherweise ein gleichberechtigtes Verhältnis von an einer Kommunikation beteiligten Einheiten (z.B. Endgeräte, Rechner, etc.), welche von Nutzern zur Kommunikation verwendet werden, verstanden. Peer-to-Peer kann daher auch als synonyme Bezeichnung für eine Kommunikation unter Gleichen gesehen werden.

Als Peer wird dabei die an der Kommunikation beteiligte Einheit - z.B. ein Rechner, ein Endgerät oder jener Nutzer, von dem dieser Rechner bzw. dieses Endgerät genutzt wird, bezeichnet. Peer-to-Peer-Anwendungen sind daher ohne zentrale Zugriffskontrolle, bei denen alle Peers gleichberechtigt sind bzw. alle Nutzer gleichberechtigt agieren.

Das Gegenteil zum Peer-to-Peer-Prinzip ist das so genannte Client-Server-System, bei dem es einerseits einen so genannten Server gibt, von welchem Anwendungen angeboten werden, und andererseits so genannte Clients, von welchen diese angebotenen Anwendungen genutzt werden. Bei Peer-to-Peer ist diese Rollenverteilung für die teilnehmenden Nutzer bzw. Peers (z.B. Rechner, Endgeräte, etc.) aufgehoben. Im Gegensatz zu einem Client-Server-System besteht beispielsweise bei einer Peer-to-Peer-Anwendung oder in einem Peer-to-Peer-Netz eine direkte Verbindung zwischen den Nutzern bzw. Peers ohne Zwischenschaltung von zentralen Servern.

Das Peer-to-Peer-Prinzip kann für verschiedene Zwecke verwendet werden. Peer-to-Peer wird beispielsweise bei Anwendungen für einen Austausch von Informationen und/oder Daten angewendet- wie z.B. Tauschbörsen für Musik- oder Videodateien, Spiele, etc. Die Daten sind dabei auf den verschiedenen Peers (z.B. Rechner, Endgerät, etc.) der Nutzer gespeichert. Eine weitere Peer-to-Peer-Anwendung ist z.B. Instant Messaging, bei welchem Nutzer in Echtzeit mit anderen Nutzern mittels kurzer Text-Mitteilungen kommunizieren (chatten) können.

Seit kurzem wird das Peer-to-Peer-Prinzip auch für die so genannte IP-Telefonie oder Voice-over-IP genutzt. Darunter wird Telefonieren über ein Kommunikationsnetzwerk nach Internet-Standards verstanden. Durch Peer-to-Peer werden dabei z.B. Anrufe von Rechner zu Rechner ermöglicht, wobei dies unabhängig von Servern wie z.B. so genannten Proxy-Servern oder Sicherheitsprogrammen wie z.B. so genannten Firewalls in Routern durchgeführt werden kann.

Weiters wird das Peer-to-Peer-Prinzip z.B. auch für das so genannte Grid Computing benutzt - wie es z.B. gerne in Biotechnologie- oder Computertechnik-Organisationen eingesetzt wird. Grid Computing kann auch als "verteilte Datenverarbeitung" bezeichnet werden, wobei z.B. für Rechnerleistungsintensive Computerprozesse ungenutzte CPU-Leistung und/oder freier Speicherplatz anderer, an dieser Peer-to-Peer-Anwendung teilnehmender Rechner genutzt wird.

Bei Anwendungen wie z.B. Tauschbörsen, Grid Computing, IP-Telefonie, etc. wird von teilnehmenden Nutzern den anderen teilnehmenden Nutzern häufig Zugriff auf die jeweiligen Peers (z.B. Rechner, Endgerät, auf dem Endgerät gespeicherte Daten, etc.) gestattet. Von den Peers der Nutzer wird dabei ein Netz - ein so genanntes Peer-to-Peer-Netz gebildet, in welchem alle teilnehmenden Peers gleichberechtigt sind. In einem Peer-to-Peer-Netz können dann von jedem Peer bzw. jedem Nutzer sowohl Anwendungen in Anspruch genommen werden, als auch den anderen Nutzern zur Verfügung gestellt werden.

Bei der Nutzung von Peer-to-Peer-Anwendungen wie z.B. Tauschbörsen, Instant Messaging, etc. bilden die Nutzer üblicherweise ein Peer-to-Peer-Netz in Form eines so genannten geschlossenen Kommunikationsnetzes. Das bedeutet, die Peer-to-Peer-Anwendung bzw. das Peer-to-Peer-Netz kann nur von jenen Nutzern verwendet werden, welche gerade aktiv sind. Ein Nutzer wird dann als aktiv bezeichnet, wenn er bei der Peer-to-Peer-Anwendung bzw. im zugehörigen Peer-to-Peer-Netz angemeldet und damit bekannt ist.

In einem Peer-to-Peer-Netz wird jedem Peer eine so genannte Node-ID zugeordnet, über welche der Peer angesprochen werden kann. Jeder Nutzer des Peer-to-Peer-Netzes verfügt z.B. eine eindeutige Nutzerkennung, welche ihm beispielsweise bei einer so genannten Registrierung zugewiesen wird. Außerdem wird dem Nutzer noch eine so genannte Ressource zugeordnet, welche beispielsweise eine IP-Adresse des Nutzers, E-Mail-Adresse, etc. umfasst. Die Ressource stellt eine Art Nutzerprofil für den Nutzer im Peer-to-Peer-Netz dar und wird z.B. durch einen Schlüssel - eine so genannte Ressource-ID - gekennzeichnet. Diese Ressource-ID kann z.B. durch ein Hashing-Verfahren aus der Nutzerkennung generiert werden.

Die nutzerspezifischen Ressourcen sind im Peer-to-Peer-Netz in Abhängigkeit einer verwendeten Architektur hinterlegt und können z.B. für die Anmeldung und/oder das Kontaktieren eines Nutzer im Peer-to-Peer-Netz bzw. bei einer Peer-to-Peer-Anwendung verwendet werden.

Peer-to-Peer-Netze können als so genannte dezentrale oder pure Peer-to-Peer-Netze gestaltet sein. Dabei wird auf jegliche zentralisierte Einrichtung verzichtet. Nutzerspezifische Ressourcen können daher auf jedem beliebigen Peer des Netzes hinterlegt sein. Durch z.B. einen Suchalgorithmus wird dann im gesamten Peer-to-Peer-Netz geprüft, ob ein bestimmter Nutzer angemeldet ist bzw. wo eine bestimmte Ressource abgelegt ist.

Eine andere Kategorie der Architektur von Peer-to-Peer-Netzen stellt die so genannte zentralisierte (hybride) Architektur dar, bei der auf einem oder mehreren Servern Informationen bzw. Daten zu den Nutzern wie z.B. Ressourcen verwaltet werden. Bei einer Anmeldung/Authentifizierung eines Nutzers muss daher nur auf diesem Server bzw. diesen Servern nach nutzerspezifischen Daten wie z.B. Ressourcen gesucht werden.

Eine dritte Kategorie der Architektur von Peer-to-Peer-Netzen sind die so genannten Super-Peer-to-Peer-Netze, welche eine Mischform der beiden anderen Architekturformen darstellen. In dieser Architektur bilden so genannte Super-Peers mit verbundenen "Clients" Cluster, wobei der Super-Peer Informationen und/oder Daten (z.B. Ressourcen, etc.) der angeschlossenen "Clients" verwaltet.

Bevor von einem Nutzer auf ein Peer-to-Peer-Netz bzw. eine Peer-to-Peer-Anwendung zugriffen werden kann, muss daher eine Anmelde- und Authentifizierungsfunktion von diesem Nutzer durchlaufen werden. Dadurch ist der Nutzer dann im Peer-to-Peer-Netz bzw. für die Peer-to-Peer-Anwendung bekannt und gilt als aktiver Nutzer.

Derzeit werden von Peer-to-Peer-Netzen bzw. Peer-to-Peer-Anwendungen unterschiedliche Arten für die Anmeldung und Authentifizierung eingesetzt. Diese können beispielsweise von der verwendeten Peer-to-Peer-Architektur, vom Anbieter einer Anwendung, von der Art der Anwendung, etc. abhängen. So kann beispielsweise eine zentralisierte Anmelde- und Authentifizierungsfunktion auf einem zentralen Server, welche vom Anbieter einer Anwendung betrieben wird, vorgesehenen sein. Der Zugriff auf eine Peer-to-Peer-Anwendung bzw. ein Peer-to-Peer-Netz kann allerdings auch z.B. von einer Zustimmung der anderen Nutzer abhängen - wie z.B. bei speziellen Instant Messaging-Anwendungen.

Möchte ein Nutzer mehrere Peer-to-Peer-Anwendungen bzw. - Netze nutzen, so muss derzeit von ihm für jede dieser Anwendungen bzw. für jedes dieser Netze eine eigene Anmeldung und Authentifizierung vorgenommen werden. Bei jeder dieser Anmeldungen und Authentifizierungen sind dann vom Nutzer beispielsweise Anmelde- und Authentifizierungsinformationen wie z.B. Nutzerkennung, Passwort, PIN, etc. einzugeben. Manchmal können diese Informationen - wie z.B. Nutzerkennung, Passwort - teilweise vom Nutzer gewählt werden können. Dabei werden häufig von den Nutzern für verschiedenen Anmeldungen und Authentifizierungen z.B. dieselben bzw. ähnliche Nutzerkennungen oder Passwörter benutzt, um sich diese besser zu merken.

Es ist aber auch möglich, dass von der Anwendung bzw. vom Netz bestimmte Vorgaben für z.B. die Nutzerkennung, das Passwort, etc. wie beispielsweise Groß- und Kleinschreibung, Verwendung von Buchstaben, Zahlen oder Sonderzeichen, etc. gemacht werden oder dass z.B. Nutzerkennungen entsprechend ihrer Verfügbarkeit einem Nutzer zugewiesen werden.

Es ist daher bei Peer-to-Peer-Anwendungen bzw. -Netzen nicht nur nachteilig, dass für jede dieser Anwendungen bzw. für jedes dieser Netze eine eigene Anmeldung und Authentifizierung vorgenommen werden muss, sondern auch dass dabei Informationen wie z.B. Nutzerkennung, Passwort, etc. mehrmals eingegeben werden müssen. Sind dieses Informationen beispielsweise für jede Peer-to-Peer-Anwendung bzw. -Netz aufgrund verschiedener Anmelde- und Authentifizierungsmechanismen noch unterschiedlich, so kann es für den Nutzer zusätzlich problematisch sein, sich diese Informationen (z.B. Nutzerkennung, Passwort, etc.) zu merken.

Für Anwendungen wie z.B. so genannte Web-Anwendungen bei Portallösungen wird in diesem Fall z.B. Single-Sign-On verwendet. Bei Peer-to-Peer ist der Einsatz von Single-Sign-On für eine einmalige Anmeldung und Authentifizierung bei mehreren Peer-to-Peer-Anwendungen bzw. -Netzen derzeit nicht bekannt.

### Darstellung der Erfindung

Der vorliegenden Erfindung liegt daher die Aufgabe zugrunde, ein Verfahren anzugeben, durch welches einem Nutzer ermöglicht wird, mittels Single-Sign-On Zugriff auf mehrere Peer-to-Peer-Anwendungen bzw. Peer-to-Peer-Netze zu erhalten.

Die Lösung dieser Aufgabe erfolgt erfindungsgemäß durch ein Verfahren der eingangs angeführten Art, wobei von einem Anbieter eine Anmelde- und Authentifizierungsfunktion zur Verfügung gestellt wird. Dabei ist zwischen dem Anbieter der Anmelde- und Authentifizierungsfunktion und den zur Verfügung gestellten Peer-to-Peer-Anwendungen ein Übereinkommen für eine Authentifizierung von Nutzern getroffen worden. Von einem Nutzer wird dann eine Anmeldung und Authentifizierung mit Hilfe der Anmelde- und Authentifizierungsfunktion beim Anbieter durchgeführt und bei einer erfolgreichen Authentifizierung des Nutzers eine Authentifizierungsinformation generiert, welche an den Nutzer übertragen wird. Bei einem Zugriffversuch auf eine Peer-to-Peer-Anwendung, für welche das Übereinkommen mit dem Anbieter für eine Authentifizierung von Nutzern besteht, wird vom Nutzer diese Authentifizierungsinformation mitgesendet. Die Authentifizierungsinformation wird dann von der Peer-to-Peer-Anwendung verifiziert und dadurch dem Nutzer ein Zugang zu dieser Peer-to-Peer-Anmeldung ermöglicht.

Die mit dieser Erfindung erzielten Vorteile bestehen insbesondere darin, dass für einen Nutzer, welcher Zugang zu mehreren, verschiedenen Peer-to-Peer-Anwendungen bzw. -Netzen erhalten möchte, eine mehrmalige Authentifizierung vermieden wird. Vom Nutzer werden Anmelde- und insbesondere Authentifizierungsinformationen (z.B. Passwort, PIN, etc.) nur noch einmal - bei einer ersten Anmeldung mittels der Anmelde- und Authentifizierungsfunktion beim Anbieter - eingegeben. Danach wird die Aufgabe der Identifizierung und Authentifizierung von einem Single-Sign-On-Mechanismus übernommen.

Weiters bietet das erfindungsgemäße Verfahren den Vorteil, dass es für verschiedene Authentifizierungstechnologien wie z.B. Verwendung von Nutzerkennung/Passwort, Verwendung von so genannten Chip- oder Smartcards, etc. eingesetzt werden kann.

Zusätzlich ist beim Einsatz des erfindungsgemäßen Verfahrens nur ein Anbieter einer Anmelde- und Authentifizierungsfunktion notwendig. Die Peer-to-Peer-Anwendungen bzw. -Netze müssen nur über ein Übereinkommen für die Authentifizierung von Nutzern mit diesem Anbieter verfügen. Es wird aber von diesen Peer-to-Peer-Anwendungen bzw. -Netzen keine eigene anwendungs- bzw. netzspezifischer Authentifizierungsfunktion (z.B. zentralisierter Login-Server) mehr benötigt. Dabei kann die Anmelde- und Authentifizierungsfunktion des Anbieters vorteilhafterweise als Peer-to-Peer-Anwendung/-Netz bzw. als Anwendung eines zentralen Servers oder eines zentral organisierten Netzwerkes zur Verfügung gestellt werden.

Es ist günstig, wenn für eine Verifizierung die Authentifizierungsinformation von der jeweiligen Peer-to-Peer-Anwendung bzw. dem jeweiligen Peer-to-Peer-Netz an den Anbieter der Anmelde- und Authentifizierungsfunktion weitergeleitet wird, da dadurch jene Information (z.B. Zertifikate, etc.), welche für die Identifizierung und Authentifizierung eines Nutzers notwendig ist, nur einmal - beim Anbieter - abgelegt und damit nicht mehr von allen Peer-to-Peer-Anwendungen/-Netzen gespeichert werden muss.

Es ist vorteilhaft, wenn für die Verifizierung der Authentifizierungsinformation eine so genannte Public-Key-Infrastruktur PKI genutzt wird. Als PKI wird in der Kryptografie ein so genanntes asymmetrisches Kryptosystem bezeichnet, welches es ermöglicht, digitale Zertifikate oder Schlüssel auszustellen, zu verteilen und zu prüfen. Die innerhalb einer PKI verwendeten Zertifikate oder Schlüssel sind beispielsweise auf Nutzer oder Endgeräte festgelegt. Die PKI hat daher den Vorteil, dass die durch das digitale Zertifikat die Authentifizierung direkt von der jeweiligen Peer-to-Peer-Anwendung bzw. dem jeweiligen Peer-to-Peer-Netz durchgeführt werden kann. PKI kann außer zur Authentifizierung auch zur Verschlüsselung von Daten verwendet werden.

Eine bevorzugte Weiterbildung der Erfindung sieht vor, dass vom Anbieter der Anmelde- und Authentifizierungsfunktion ein so genannter sicherer Server zur Verfügung gestellt wird, wobei auf diesem Server für jeden Nutzer Berechtigungsnachweise - so genannte Secure Credential Token - für alle jene Peer-to-Peer-Anwendungen/-Netze gesammelt und gespeichert werden, zu welchen dem Nutzer eine Zugangsberechtigung gewährt worden ist. Die Berechtungsnachweise werden dann bei jeder Anmeldung und Authentifizierung beim Anbieter der Anmelde- und Authentifizierungsfunktion dem jeweiligen Nutzer als Authentifizierungsinformation auf gesicherte Weise übermittelt.

Von jeder Peer-to-Peer-Anwendung bzw. jedem Peer-to-Peer-Netz werden entsprechende Berechtigungsnachweise für einen Nutzer zur Verfügung gestellt und an den sicheren Server des Anbieters der Anmelde- und Authentifizierungsfunktion übertragen. Im Fall, dass die Berechtigungsnachweise mit einer Gültigkeitsdauer versehen sind, können dann auf einfache Weise nach Ablauf dieser Gültigkeitsdauer von der Peer-to-Peer-Anwendung bzw. dem Peer-to-Peer-Netz neue Berechtigungsnachweise generiert werden. Diese Berechtigungsnachweise werden dann an den Anbieter der Anmelde- und Authentifizierungsfunktion übermittelt und dem Nutzer zur Verfügung gestellt.

Es empfiehlt sich - insbesondere bei mobilen Endgeräten (z.B. PDA, Laptop, etc.), dass die Authentifizierungsinformation lokal und permanent auf einem Endgerät des Nutzers hinterlegt ist, da die Authentifizierungsinformation auch noch dann genutzt werden kann, wenn beispielsweise das Endgeräte einige Zeit ohne Stromversorgung war. Zusätzlich bietet eine Speicherung der Authentifizierungsinformation in einem permanenten, lokalen Speicher eines Endgerätes einen gewissen Schutz vor dem Zugriff durch unautorisierte Nutzer - insbesondere wenn das Endgerät selbst mittels z.B. Passwort oder PIN geschützt wird.

Wird die Authentifizierungsinformation nicht in einem permanenten Speicher abgelegt, sondern z.B. in einem RAM gespeichert, so geht sie verloren, wenn das Endgerät abgeschaltet wird. Vom Nutzer muss dann wieder die Anmelde- und Authentifizierungsfunktion beim Anbieter durchgeführt werden, wenn das Endgerät das nächste Mal eingeschaltet wird und der Nutzer die Peer-to-Peer-Anwendungen/-Netze wieder benutzen möchte.

Zweckmäßiger Weise wird eine Gültigkeitsdauer für die Authentifizierungsinformation festgelegt. Das bietet den Vorteil, dass ein Nutzer sich während der Gültigkeitsdauer direkt bei Peer-to-Peer-Anwendungen bzw. -Netzen einloggen kann, ohne zuerst eine Anmeldung bzw. Authentifizierung beim Anbieter der Anmelde- und Authentifizierungsfunktion durchführen zu müssen.

In bestimmten Fällen kann es auch vorteilhaft sein, wenn die Authentifizierungsinformation für ungültig erklärt wird, für den Fall, dass die Authentifizierungsinformation von einer Peer-to-Peer-Anwendung bzw. bei einem Peer-to-Peer-Netz bei der Anmeldung des Nutzers nicht verifiziert werden kann. Vom Nutzer wird durch eine neuerliche Authentifizierung eine neue Authentifizierungsinformation vom Anbieter der Anmelde- und Authentifizierungsfunktion angefordert. Damit können auf einfache Weise Zugriffe durch unberechtigte Nutzer auf Peer-to-Peer-Anwendungen/-Netze verhindert werden.

### Kurzbeschreibung der Zeichnung

Die Erfindung wird nachfolgend anhand einer Figur näher erläutert, welche in beispielhafter Weise den Ablauf des erfindungsgemäßen Verfahrens für Single-Sign-On bei schematisch dargestellten Peer-to-Peer-Anwendungen bzw. - Netzen zeigt.

### Ausführung der Erfindung

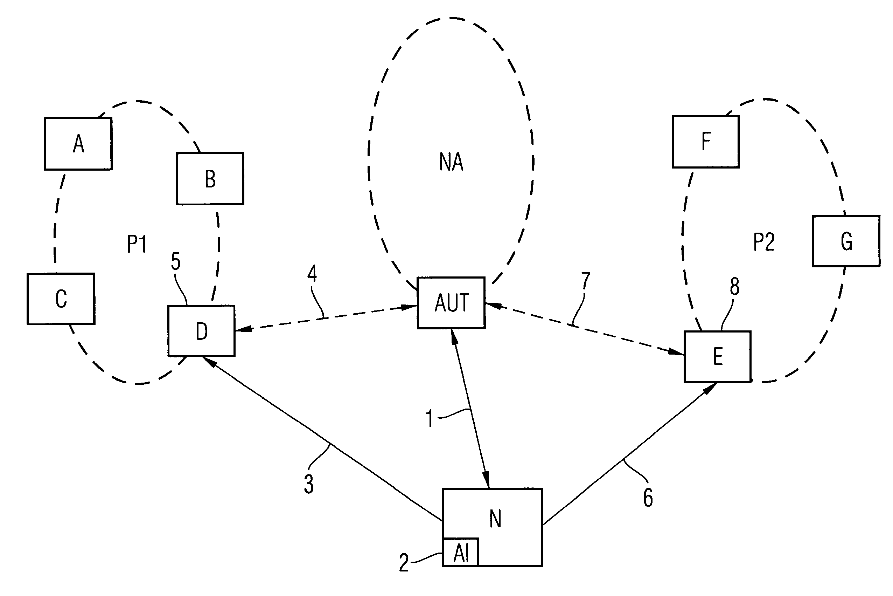

In Figur 1 sind schematisch drei Netze P1, P2 und NA dargestellt. Das erste Netz P1 ist ein Peer-to-Peer-Netz bzw. ein Netz, welches durch eine Peer-to-Peer-Anwendung gebildet wird und beispielhaft Peers A, B, C und D umfasst. Das zweite Netz P2 ist ebenfalls ein Peer-to-Peer-Netz, welches durch eine Peer-to-Peer-Anwendung gebildet wird. Das zweite Netz P2 umfasst beispielhaft Peers E, F und G.

Im dritten Netz NA, welches beispielsweise ein Peer-to-Peer-Netz oder ein zentral organisiertes Netz sein kann, wird von einem Anbieter eine Anmelde- und Authentifizierungsfunktion AUT zur Verfügung gestellt. Die Anmelde- und Authentifizierungsfunktion AUT kann z.B. als Peer-to-Peer-Anwendung oder als Anwendung, welche von einem zentralen Server ausgeführt wird, gestaltet sein.

In Figur 1 wird außerdem ein beispielhafter Nutzer N gezeigt, von welchem über ein Endgerät - wie z.B. einen Rechner, einen Laptop, eine PDA, etc. die Peer-to-Peer-Netze/-Anwendungen P1, P2 sowie die Anmelde- und Authentifizierungsfunktion AUT genutzt werden sollen.

Bevor die Anmelde- und Authentifizierungsfunktion AUT vom Nutzer N genutzt werden kann, muss der Nutzer N beim Anbieter der Anmelde- und Authentifizierungsfunktion AUT registriert werden - d.h. es wird für den Nutzer N ein so genanntes Nutzerkonto (Account) mit z.B. einer Nutzerkennung eingerichtet.

Auch um die zwei Peer-to-Peer-Netze P1, P2 nutzen zu können, werden für den Nutzer N ebenfalls Nutzerkonten (Accounts) mit z.B. Nutzerkennungen und anderen Informationen (z.B. Nutzerprofil mit Ressource-ID, etc.) eingerichtet. Diese Informationen werden z.B. auf einem Peer A, B, C, D, E, F, G des jeweiligen Peer-to-Peer-Netzes P1, P2 hinterlegt. Beispielsweise kann dazu jener Peer A, B, C, D, E, F, G ausgewählt werden, dessen so genannte Node-ID der Ressource-ID des Nutzers N am nächsten gelegen ist. Die Ressource-ID des Nutzers N kann beispielsweise durch ein Hashing-Verfahren aus der Nutzerkennung des Nutzers N generiert werden. Im angegebenen Beispiel sind für das Peer-to-Peer-Netz P1 der Peer D und für das Peer-to-Peer-Netz P2 der Peer E dem Nutzer am nächsten gelegen.

Danach wird vom Nutzer N eine gesicherte Beziehung bzw. ein Übereinkommen zwischen dem Anbieter der Anmelde- und Authentifizierungsfunktion AUT und den Peer-to-Peer-Netzen P1, P2 aufgebaut. Vom Nutzer N kann beispielsweise beim Anbieter die Anmelde- und Authentifizierungsfunktion AUT subskribiert werden, wobei vom Nutzer N angegeben wird, für welche Peer-to-Peer-Netze P1, P2 die Anmelde- und Authentifizierungsfunktion AUT für Single-Sign-On genutzt werden soll. Danach wird beispielsweise vom Nutzer N oder dem Anbieter für die Nutzerkennung des Nutzers N eine logische Verbindung zwischen dem Netz NA mit der Anmelde- und Authentifizierungsfunktion AUT und den beiden Peer-to-Peer-Netzen P1, P2 eingerichtet. Damit besteht nun ein Übereinkommen zwischen dem Anbieter der Anmelde- und Authentifizierungsfunktion AUT und den beiden Peer-to-Peer-Netzen P1, P2 bzw. den von ihnen angeboten Peer-to-Peer-Anwendungen für eine Authentifizierung des Nutzers N.

In einem ersten Verfahrensschritt 1 wird vom Nutzer N eine Anmeldung und Authentifizierung - ein so genanntes Login - im Netz NA bzw. beim Anbieter der Anmelde- und Authentifizierungsfunktion AUT mit Hilfe der Anmelde- und Authentifizierungsfunktion AUT durchgeführt. Üblicherweise wird dabei bei vom Nutzer eine Nutzerkennung und ein Passwort eingegeben. Bei einer erfolgreichen Anmeldung und Authentifizierung wird für den Nutzer N im Netz NA bzw. vom Anbieter der Anmelde- und Authentifizierungsfunktion AUT eine Authentifizierungsinformation AI erzeugt.

Diese Authentifizierungsinformation AI wird an den Nutzer N übertragen und in einem zweiten Verfahrensschritt 2 auf dem Endgerät des Nutzer N beispielsweise in einem permanenten oder in einem flüchtigen Speicher lokal gespeichert.

Je nachdem welches Authentifizierungskonzept verwendet wird, kann die Authentifizierungsinformation AI entweder aus einem Authentifizierungsmerkmal (Authentication Token), welche vom der Anmelde- und Authentifizierungsfunktion generiert wird, oder aus Berechtigungsnachweisen - so genannten Secure Credential Token - für alle Peer-to-Peer-Netze P1, P2, zu deren Benutzung der Nutzer N berechtigt sein soll, bestehen.

Wird nun in einem dritten Verfahrensschritt 3 vom Nutzer N eine logische Verbindung zum Peer-to-Peer-Netz P1 bzw. zur zugehörigen Peer-to-Peer-Anwendung aufgebaut, so wird für eine Anmeldung des Nutzers N im Peer-to-Peer-Netz P1 die Authentifizierungsinformation AI gesendet. Dabei beispielsweise in Abhängigkeit von der Ressource-ID des Nutzers N der nächstliegende Peer A, B, C, D im Peer-to-Peer-Netz P1 gesucht. Im vorliegenden Beispiel wird Peer D als der nächstliegende des Peer-to-Peer-Netzes P1 ermittelt.

In einem vierten Verfahrensschritt 4 wird dann vom Peer D die übermittelte Authentifizierungsinformation AI des Nutzers N verifiziert. Je nach verwendetem Authentifizierungskonzept kann dies auf unterschiedliche Weise erfolgen. Wird beispielsweise als Authentifizierungsinformation ein Authentifizierungsmerkmal gemeinsam mit einer Public Key Infrastruktur eingesetzt, so kann die Authentifizierung direkt von Peer D vorgenommen werden. Wird z.B. als Authentifizierungsinformation ein Authentifizierungsmerkmal ohne Public Key Infrastruktur verwendet, so wird das Authentifizierungsmerkmal vom Peer D an das Netz NA bzw. an den Anbieter der Anmelde- und Authentifizierungsfunktion AUT weitergeleitet. In Netz NA wird dann eine Korrektheit der Authentifizierungsinformation AI überprüft und eine entsprechende Antwort an den Peer D gesendet. Werden in der Authentifizierungsinformation AI z.B. Berechtigungsnachweise benutzt, so werden diese vom Peer D aus der Authentifizierungsinformation AI für die Authentifizierung des Nutzers N ausgelesen und dann geprüft.

Nach erfolgreicher Authentifizierung wird in einem fünften Verfahrensschritt 5 ein Nutzerprofil des Nutzers N als so genannte Ressource vom Peer D gespeichert und der Nutzer N für den Zugriff auf das Peer-to-Peer-Netzwerk P1 bzw. die zugehörige Peer-to-Peer-Anwendung zugelassen.

Ist die Authentifizierung des Nutzers N nicht erfolgreich verlaufen, so werden keine Daten für den Nutzer N vom Peer D gespeichert und der Zugriff verweigert. In diesem Fall ist dann eine neuerliche Authentifizierung des Nutzer N notwendig.

Wird nun in einem sechsten Verfahrensschritt 6 vom Nutzer N eine logische Verbindung zum Peer-to-Peer-Netz P2 bzw. zur zugehörigen Peer-to-Peer-Anwendung aufgebaut, um auch zu diesem Zugang zu erhalten, so wird wie im dritten Verfahrensschritt 3 wieder für eine Anmeldung des Nutzers N im Peer-to-Peer-Netz P2 die Authentifizierungsinformation AI gesendet. Dabei wird dann wieder in Abhängigkeit von der Ressource-ID des Nutzers N der nächstliegende Peer E, F, G im Peer-to-Peer-Netz P2 gesucht. Im vorliegenden Beispiel wird Peer E als der nächstliegende des Peer-to-Peer-Netzes P2 ermittelt.

In einem siebenten Verfahrensschritt 7 wird wie schon im Verfahrensschritt 4 dann vom Peer E die übermittelte Authentifizierungsinformation AI des Nutzers N verifiziert. Je nach verwendetem Authentifizierungskonzept kann dies wieder auf unterschiedliche, bereits oben beschriebene Weise erfolgen.

Nach erfolgreicher Authentifizierung wird in einem achten Verfahrensschritt 8 ein Nutzerprofil des Nutzers N als so genannte Ressource vom Peer E gespeichert und der Nutzer N für den Zugriff auf das Peer-to-Peer-Netzwerk P2 bzw. die zugehörige Peer-to-Peer-Anwendung zugelassen.

Da die Authentifizierungsinformation AI im zweiten Verfahrensschritt 2 lokal in einem Speicher auf dem Endgerät des Nutzer N gespeichert wurde, kann sie für weitere Authentifizierungen bei Peer-to-Peer-Netzen P1, P2 bzw. Peer-to-Peer-Anwendungen, für welche für den Nutzer N ein Übereinkommen mit dem Anbieter der Anmelde- und Authentifizierungsfunktion AUT besteht, beliebig oft verwendet werden, ohne dass die Anmelde- und Authentifizierungsfunktion AUT neuerlich durchlaufen werden muss.

Auch wenn vom Nutzer N beispielsweise das Peer-to-Peer-Netz P1 verlassen wird - d.h. der Nutzer N loggt sich aus, so kann der Nutzer N zu einem späteren Zeitpunkt anhand dieser gespeicherten Authentifizierungsinformation AI vom Peer-to-Peer-Netz P1 wieder authentifiziert werden. Eine vorhergehende Kontaktaufnahme mit dem Netz NA bzw. dem Anbieter der Anmelde- und Authentifizierungsfunktion AUT ist dabei nicht notwendig.

Für eine Wiederverwendung der Authentifizierungsinformation AI ist insbesondere eine lokale Speicherung in einem permanenten Speicher des Endgerätes interessant, da dann die Authentifizierungsinformation AI auch nach einem Ausschalten bzw. neuerlichen Einschalten des Endgerätes verfügbar ist. Das kann vor allem bei mobilen Endgeräten (z.B. Laptop, PDA, etc.) genutzt werden. Wird vom Nutzer beispielsweise an einem Ort ein Peer-to-Peer-Netz P1 verwendet und dann das Endgerät ausgeschaltet, so kann der Nutzer N anhand der gespeicherten Authentifizierungsinformation AI vom z.B. Peer-to-Peer-Netz P1 wieder authentifiziert werden, wenn dieses z.B. nach neuerlichem Einschalten des Endgerätes vom Nutzer N an einem Ort wieder kontaktiert wird.

Wird die Authentifizierungsinformation AI nicht in einem permanenten Speicher abgelegt, sondern z.B. in einem RAM gespeichert, so geht sie verloren, wenn das Endgerät abgeschaltet wird. Vom Nutzer N muss dann wieder die Anmelde- und Authentifizierungsfunktion AUT beim Anbieter durchgeführt werden, wenn das Endgerät das nächste Mal eingeschaltet wird und der Nutzer die Peer-to-Peer- Netze P1, P2, bzw. - Anwendungen wieder benutzen möchte.

Ist die Authentifizierungsinformation AI mit einer Gültigkeitsdauer versehen, so kann sie bis zum Ablauf dieser Gültigkeitsdauer für eine Authentifizierung bei Peer-to-Peer-Netzen P1, P2 bzw. -Anwendungen, für welche ein Übereinkommen mit dem Anbieter der Anmelde- und Authentifizierungsfunktion AUT besteht, beliebig wieder verwendet werden. Die Gültigkeitsdauer kann beispielsweise durch ein Ablaufdatum oder durch einen Ablauf eines Passwortes -wie z.B. bei Berechtigungsnachweisen als Authentifizierungsinformation AI festgelegt werden.

Ist die Authentifizierungsinformation AI abgelaufen, so wird die Authentifizierung beim Peer-to-Peer-Netz P1, P2 nicht erfolgreich verlaufen und der Nutzer N erhält keinen Zugriff. In diesem Fall muss vom Nutzer N das Netz NA bzw. der Anbieter der Anmelde- und Authentifizierungsfunktion AUT kontaktiert werden, damit entsprechend dem ersten Verfahrensschritt 1 eine neue, gültige Authentifizierungsinformation AI generiert und an den Nutzer N übertragen wird.

Für die beispielhafte Beschreibung des Ablaufes des erfindungsgemäßen Verfahrens für Single-Sign-On bei Peer-to-Peer-Anwendungen bzw. -Netzen P1, P2 wurde von einer dezentralen oder puren Peer-to-Peer-Netz-Architektur ausgegangen. Bei dieser Architekturform wird auf jegliche zentrale Einrichtung verzichtet und nutzerspezifische Ressourcen können auf jedem beliebigen Peer A, B, C, D, E, F, G des Netzes hinterlegt sein.

Das erfindungsgemäße Verfahren für Single-Sign-On bei Peer-to-Peer-Anwendungen bzw. -Netzen P1, P2 ist allerdings in gleicher Weise für andere Peer-to-Peer-Netz-Architekturformen - wie z.B. zentralisierte (hybride) Peer-to-Peer-Netze, Super-Peer-to-Peer-Netze, etc. einsetzbar. Ein Unterschied in der Abhängigkeit der Architekturform ergibt sich nur bei der Kontaktaufnahme zwischen dem Nutzer N und dem Peer-to-Peer-Netz P1, P2 sowie bei der Speicherung der nutzerspezifischen Ressourcen.

Wird beispielsweise beim dezentralen Peer-to-Peer-Netz P1, P2 der zum Nutzer N nächstgelegene Peer D, E gesucht, so wird z.B. bei einem zentralisierten Peer-to-Peer-Netz P1, P2 zuerst ein Kontakt zu einen zentralisierten Server aufgebaut, auf welchen dann auch die nutzerspezifischen Ressourcen abgespeichert werden. Bei Super-Peer-to-Peer-Netze wird beispielsweise der Kontakt für eine Authentifizierung zu einem so genannten Super-Peer aufgebaut und auf diesem die nutzerspezifischen Ressourcen hinterlegt.

## Patentansprüche

1. Verfahren für Single-Sign-On bei Peer-to-Peer-Anwendungen (P1, P2), wobei von einem Nutzer (N) mehrere Peer-to-Peer-Anwendungen (P1, P2) genutzt werden, **dadurch**
**gekennzeichnet, dass**
- von einem Anbieter eine Anmelde- und Authentifizierungsfunktion (AUT) zur Verfügung gestellt wird, wobei zwischen dem Anbieter der Anmelde- und Authentifizierungsfunktion (AUT) und den zur Verfügung gestellten Peer-to-Peer-Anwendungen (P1, P2) ein Übereinkommen für eine Authentifizierung von Nutzern (N) getroffen worden ist,
- dass von einem Nutzer (N) eine Anmeldung und Authentifizierung mit Hilfe der Anmelde- und Authentifizierungsfunktion (AUT) beim Anbieter durchgeführt wird (1),
- dass bei einer erfolgreichen Authentifizierung des Nutzers (N) eine Authentifizierungsinformation (AI) generiert wird, welche an den Nutzer (N) übertragen wird (2),
- dass bei einem Zugriffversuch auf eine Peer-to-Peer-Anwendung (P1, P2), für welche das Übereinkommen mit dem Anbieter für eine Authentifizierung von Nutzern (N) besteht, vom Nutzer (N) diese Authentifizierungsinformation (AI) mitgesendet wird (3, 6),
- und dass dann die Authentifizierungsinformation (AI) von der Peer-to-Peer-Anwendung (P1, P2) verifiziert wird (4,7) und **dadurch** dem Nutzer (N) ein Zugang zu dieser Peer-to-Peer-Anmeldung (P1, P2) ermöglicht wird (5, 8).

2. Verfahren nach Anspruch 1 **dadurch gekennzeichnet, dass** die Anmelde- und Authentifizierungsfunktion (AUT) als Peer-to-Peer-Anwendung (P1, P2) ausgestaltet ist oder als Anwendung eines zentralen Servers oder eines zentral organisierten Netzwerkes (NA) zur Verfügung gestellt wird.

3. Verfahren nach einem der Ansprüche 1 bis 2 **dadurch gekennzeichnet, dass** für eine Verifizierung die Authentifizierungsinformation (AI) von der jeweiligen Peer-to-Peer-Anwendung (P1, P2) an den Anbieter der Anmelde- und Authentifizierungsfunktion (AUT) weitergeleitet wird (4, 7).

4. Verfahren nach einem der Ansprüche 1 bis 3 **dadurch gekennzeichnet, dass** für die Verifizierung der Authentifizierungsinformation (AI) eine so genannte Public-Key-Infrastruktur PKI genutzt wird.

5. Verfahren nach einem der Ansprüche 1 bis 4 **dadurch gekennzeichnet, dass** vom Anbieter der Anmelde- und Authentifizierungsfunktion (AUT) ein so genannter sicherer Server zur Verfügung gestellt wird,
- dass auf diesem Server für jeden Nutzer (N) Berechtigungsnachweise für jene Peer-to-Peer-Anwendungen (P1, P2) gesammelt und gespeichert werden, zu welchen dem Nutzer eine Zugangsberechtigung gewährt worden ist,
- und dass bei jeder Anmeldung und Authentifizierung beim Anbieter der Anmelde- und Authentifizierungsfunktion (AUT) dem jeweiligen Nutzer (N) die entsprechenden, gesammelten Berechtungsnachweise als Authentifizierungsinformation (AI) auf gesicherte Weise übermittelt werden.

6. Verfahren nach Anspruch 5 **dadurch gekennzeichnet, dass** von jeder Peer-to-Peer-Anwendung (P1, P2) entsprechende Berechtigungsnachweise für einen Nutzer (N) zur Verfügung gestellt und an den sicheren Server des Anbieters der Anmelde- und Authentifizierungsfunktion (AUT) übertragen werden, und dass in dem Fall, dass die Berechtigungsnachweise mit einer Gültigkeitsdauer versehen sind, nach Ablauf dieser Gültigkeitsdauer von der Peer-to-Peer-Anwendung (P1, P2) neue Berechtigungsnachweise für den Nutzer (N) an den Anbieter der Anmelde- und Authentifizierungsfunktion (AUT) gesendet werden.

7. Verfahren nach einem der Ansprüche 1 bis 6 **dadurch gekennzeichnet, dass** die Authentifizierungsinformation (AI) lokal und permanent auf einem Endgerät des Nutzers (N) hinterlegt wird.

8. Verfahren nach einem der Ansprüche 1 bis 7 **dadurch gekennzeichnet, dass** eine Gültigkeitsdauer für die Authentifizierungsinformation (AI) festgelegt wird.

9. Verfahren nach einem der Ansprüche 1 bis 8 **dadurch gekennzeichnet, dass** die Authentifizierungsinformation (AI) für ungültig erklärt wird, wenn die Authentifizierungsinformation (AI) von einer Peer-to-Peer-Anwendung (P1, P2) bei der Anmeldung des Nutzers (N) nicht verifiziert wird, und dass dann vom Nutzer (N) eine neue Authentifizierungsinformation (AI) vom Anbieter der Anmelde- und Authentifizierungsfunktion (AUT) angefordert wird.
